# EUROPÄISCHE PATENTSCHRIFT

(11) **EP 0 487 840 B1**
(45) Veröffentlichungstag und Bekanntmachung des Hinweises auf die Patenterteilung: **29.06.1994**
(21) Anmeldenummer: 91114750.2
(22) Anmeldetag: 02.09.1991
(51) Int. Cl.: F16J 3/04

(54) **Faltenbalg aus thermoplastischem Elastomer**
Bellows of thermoplastic elastomer
Soufflet en elastomère thermoplastique

(30) Priorität: 24.11.1990 DE 4037482
(43) Veröffentlichungstag der Anmeldung: 03.06.1992
(73) Patentinhaber: Firma Carl Freudenberg, 69469 Weinheim (DE)
(72) Erfinder: Hempel, Jürgen, Dr., W-6940 Weinheim (DE)

(56) Entgegenhaltungen:
- FR-A- 2 596 693
- PATENT ABSTRACTS OF JAPAN vol. 14, no. 351 (M-100) 30. Juli 1990 & JP-A-2 120 574 (TOYODA) 8. Mai 1990
- PATENT ABSTRACTS OF JAPAN vol. 11, no. 333 (M-637) 30. Oktober 1987 & JP-A-62 116 316 (TOYODA) 27. Mai 1987
- PATENT ABSTRACTS OF JAPAN vol. 10, no. 040 (M-454) 18. Februar 1986 & JP-A-60 193 620 (TOYO GOMU) 2. Oktober 1985

## Beschreibung

In DE-OS 33 09 386 wird ein Faltenbalg beschrieben, dessen Einspannstellen durch konstruktive Maßnahmen so ausgebildet sind, daß sie eine Elastizität besitzen, die dem reinen thermoplastischen Werkstoff nicht eigen sind. Diese Elastizität soll dazu dienen, die Einspannstelle über einen längeren Zeitraum dicht zu halten und für einen konstant festen Sitz zu sorgen.

Die nicht die Einspannstellen umfassenden Teile von Faltenbälgen werden in neuerer Zeit vermehrt aus thermopalstischen Elastomeren hergestellt. Beispielhaft sei genannt die den nächsten Stand der Technik bildende JP-A-21 20 574, wo beide Einspannstellen aus thermoplastischem Elastomer bestehen, welches gummielastische Eigenschaften aufweist, und der Balgkörper andererseits aus einem thermoplastischem Elastomer derselben Werkstoffgruppe, jedoch mit niedrigerer Gummielastizität, besteht. Einspannstellen und Körper sind miteinander verschweißt. Die Einspannstellen haben also neben den elastomeren in jedem Falle auch thermoplastische Eigenschaften.

Einspannstellen aus thermoplastischen Elastomeren sind kostengünstig zu verarbeiten und erfüllen die meisten, insbesondere in der Automobilindustrie gestellten Anforderungen an mechanische Eigenschaften und chemische Beständigkeit gegen Mineralöle und Feuchtigkeit.

Nachteilig an diesen Materialien ist, daß sie einen etwa doppelt so hohen compression set wie Elastomer-Mischungen aufweisen. Daneben stellt sich insbesondere bei thermischer Beanspruchung häufig der Nachteil ein, daß das Material der Einspannstelle unter der Einspannkraft "wegläuft", so daß sich die Einspannung lockern kann. Dieses Phänomen ist bei thermoplastischen Werkstoffen als "Kalter Fluß" bekannt.

"Compression set" ist die übliche Bezeichnung für den Druckverformungsrest. Dieses Phänomen ist von äußerster Wichtigkeit für Gummiartikel, die für Dichtungen eingesetzt werden. Es wird gemessen unter konstanter Belastung nach ASTM D 395-67; DIN 53517. "Kalter Fluß" bezeichnet das Kriechen des Werkstoffs unter hoher Dauerbelastung. Eine abgeleitete Größe für konstruktive Berechnungen ist der Kriechmodul, für thermoplastische Formenmassen nach DIN 53444 im Zeitstand-Zugversuch ermittelbar: Probekörper werden in einem konstanten Prüfklima durch Kräfte, die während der Versuchsdauer gleich bleiben, einachsig belastet und das Zeit-Dehnungs-Diagramm aufgenommen.

Man behilft sich zur Überwindung dieser negativen Eigenschaften thermoplastisch-elastomerer Materialien damit, daß man selbstnachspannende Spannbänder einsetzt oder unter das Spannband eine Gummiunterlage klebt. Diese besondere Ausgestaltung der Einspannstelle verteuert jedoch die Herstellung des Faltenbalgs wesentlich.

Desweiteren wird beim Anziehen der Spannbänder häufig der Druck nicht gleichmäßig ringförmig auf den gesamten Umfang der Einspannstelle verteilt, sondern es entstehen Druckspitzen, die zu einer vorzeitigen Materialzerstörung führen.

Die vorliegende Erfindung hat zur Aufgabe, einen Faltenbalg anzugeben, dessen Einspannstellen zerstörungsfrei durch Spannbänder befestigt werden können, ohne daß ein besonderer Material- oder Konstruktionsaufwand erforderlich ist. Die Einspannstellen sollen dabei einen konstant festen Sitz ermöglichen, über einen längeren Zeitraum zuverlässig abdichten und mit dem Werkstoff des eigentlichen Faltenbalgs unlösbar und kleberfrei verbindbar sein.

Die Lösung dieser Aufgabe besteht in einem Faltenbalg aus thermoplastischem Elastomer, bei dem mindestens eine der einander gegenüberliegenden Einspannstellen vorwiegend aus elastomerem, gummiartigem Material besteht, welches mit dem thermoplastischen Elastomer unlösbar durch Anschweißen bei erhöhter Temperatur verbunden ist.

Das gummiartige Elastomer besitzt keine thermoplastischen Eigenschaften, ist also ein "reines" Elastomer, dessen Moleküle vernetzt sind. Wichtig zur Lösung der gestellten Aufgabe ist insbesondere, daß der elastomere Werkstoff der Einspannstelle ein mindestens etwa um die Hälfte niedrigeres compression set aufweist als das thermoplastische Elastomer. Auf diesen Umstand wurde bereits in der Beschreibungseinleitung hingewiesen. Es ist ferner wichtig, für die Einspannstelle einen elastomeren Werkstoff zu wählen, welcher einen deutlich geringeren Kalten Fluß unter Einwirkung einer äußeren Kraft aufweist als das thermoplastische Elastomer.

Bevorzugte Werkstoffpaarungen sind einerseits Polymerlegierungen aus Polypropylen und Ethylen-Propylen-Dien-Terpolymer (EPDM) für das thermoplastisch-elastomere Material des eigentlichen Faltenbalgs, andererseits reine Styrol-Butadien-Kautschuke oder Ethylen-Propylen-Dien-Terpolymere für das Elastomer der Einspannstelle.

Besteht das thermoplastische Elastomer aus Polyetherester, so werden die Einspannstellen bevorzugt aus Urethan-Kautschuk bestehen.

"Polymerlegierungen" ist der Oberbegriff für alle Mischungen von Polymeren, auch wenn beim Aufbereiten noch zusätzlich eine Reaktion abläuft.

Werkstoffpaarungen mit den genannten Polymerlegierungen als thermoplastisch-elastomere-Komponente sind deshalb besonders geeignet, weil wegen der gleichartigen Bestandteile in den Molekülstrukturen eine optimale Verbindung der beiden Polymeren im warmen Zustand erreicht wird, vergleichbar einem Schweißvorgang.

Geeignete Polyetherester sind z.B. Blockpolymere aus Polyterephthalsäureestern und Polyalkylenglykolen (erhältlich unter dem Markennamen Hytrel) mit Molekulargewichten bis zu 25 000.

Mit diesen Werkstoffen lassen sich am besten Urethan-Kautschuke verbinden, so z.B. thermoplastische Polyurethane mit Polyester als Polyolkomponente oder Urethankautschuk-Mischungen auf Polyesterbasis.

Der Vorzug des rein elastomeren Werkstoffs an der Einspannstelle liegt insbesondere in einem niedrigeren compression set und darin, daß es möglich ist, durch geeignete Auswahl der Werkstoffpaarungen klebstoffrei eine unlösbare Verbindung zwischen den Werkstoffen bereits bei der Herstellung des Faltenbalgs zu bewirken.

Die den eigentlichen Faltenbalg bildenden thermoplastischen Elastomeren sind bekannte Werkstoffe; ihre Moleküle bestehen aus zwei verschiedenen Polymersegmenten, von denen das eine ein starres, sogenanntes Hartsegment, das andere ein elastisches Weichsegment darstellt. Die Polymersegmente sind dabei aus längeren Ketten gleichartiger Bausteine (Monomere) gebildet.

Die Hartsegmente halten die Weichsegmente durch physikalische, netzartige Bindungen zusammen, bis bei höheren Temperaturen die Hartsegmente aufschmelzen und der gesamte Werkstoff thermoplastisch verformt und verarbeitet werden kann. In diesem Zustand ist er mit den anderen elastomeren, gummiartigen Materialien dauerhaft verbindbar. Beim Abkühlen tritt die physikalische Vernetzung wieder ein; es überwiegen dann die elastomeren Eigenschaften.

Technisch kann so vorgegangen werden, daß der Faltenbalg durch Spritzblasen, Spritzextrudieren oder Extrusionsblasformen hergestellt wird, wobei zuvor in die Form ringförmige Teile aus Gummi an die beiden zukünftigen Einspannstellen eingelegt werden. Beim Aufblasen des Rohlings in der Form drückt sich das thermoplastische Material gegen die Werkzeugwand und damit gegen die Gummiringe, wobei eine unlösbare Verbindung zwischen beiden Werkstoffen eingegangen wird.

Die Gummiringe werden einfach vor dem Einführen des thermoplastisch-elastomeren Materials auf die Blasdorne der Extrudier- oder Blas- Vorrichtung aufgesteckt. Dies kann gleichzeitig oder in verschieden Stadien der Herstellung erfolgen. Die Querschnitte der Ringe können beliebig ausgebildet sein; ihre Form wird letztendlich durch die Herstellungskosten des Formteils bestimmt sein.

Die im folgenden geschilderten Herstellungsverfahren werden anhand der Figuren 1 bis 6 näher erläutert. Es zeigen:
Figur 1 eine Spritzblasvorrichtung;
Figuren 2 bis 6 schematisch eine Spritzextrudier-Vorrichtung in verschiedenen Arbeitspositionen:

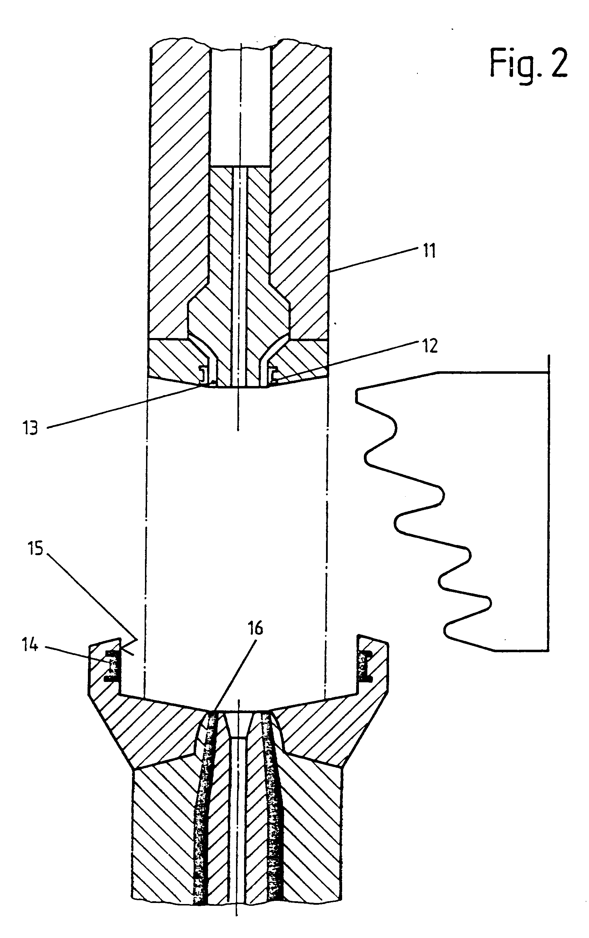

   - Figur 2:: Einlegen der Gummiringe;

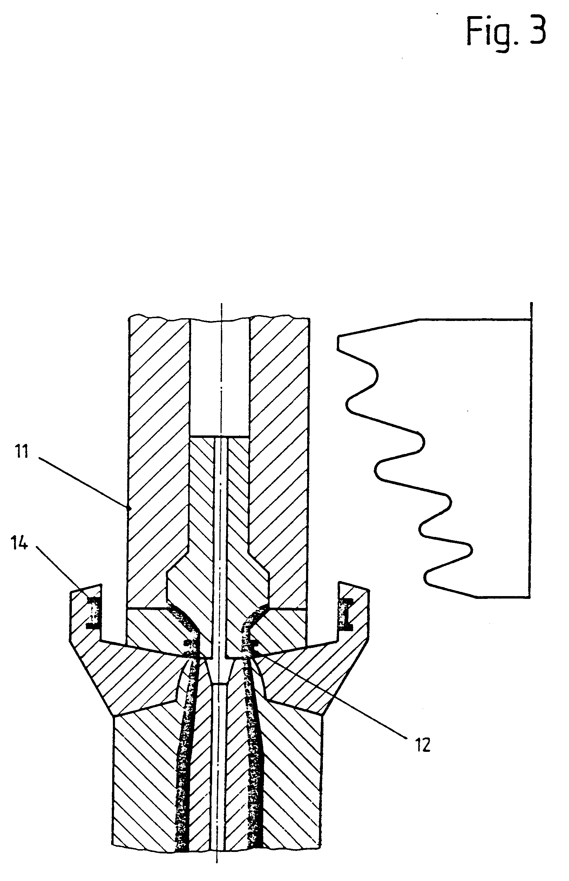

   - Figur 3:: Einspritzen in das Formnest des Dornes;

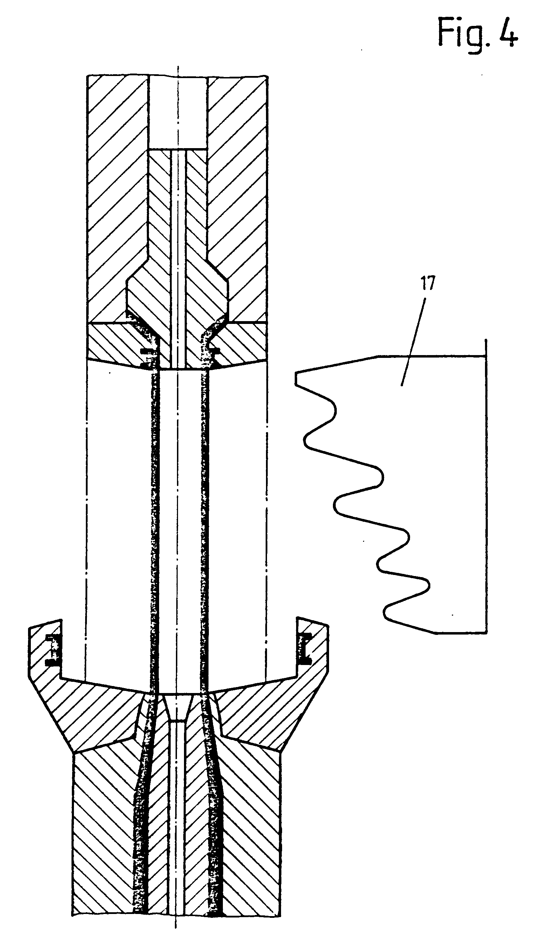

   - Figur 4:: Extrusion des Vorformlings;

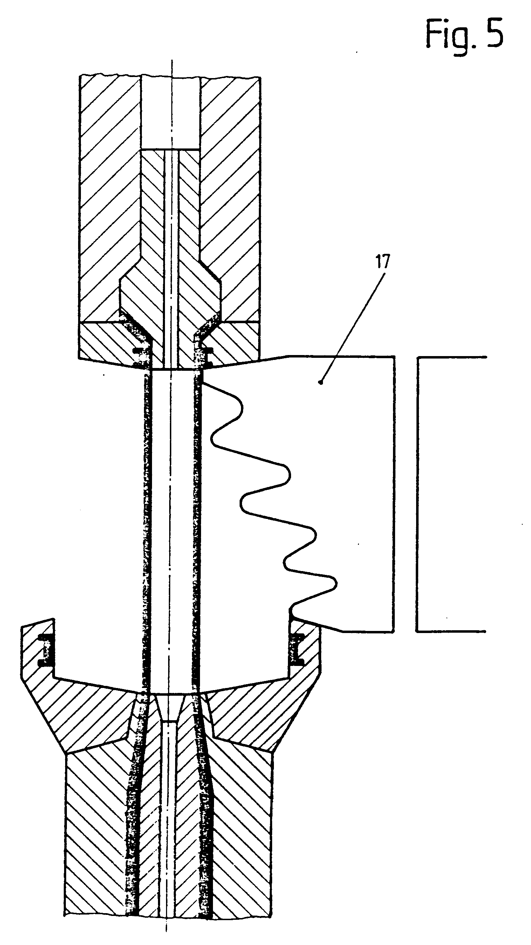

   - Figur 5:: Schließen der Form;

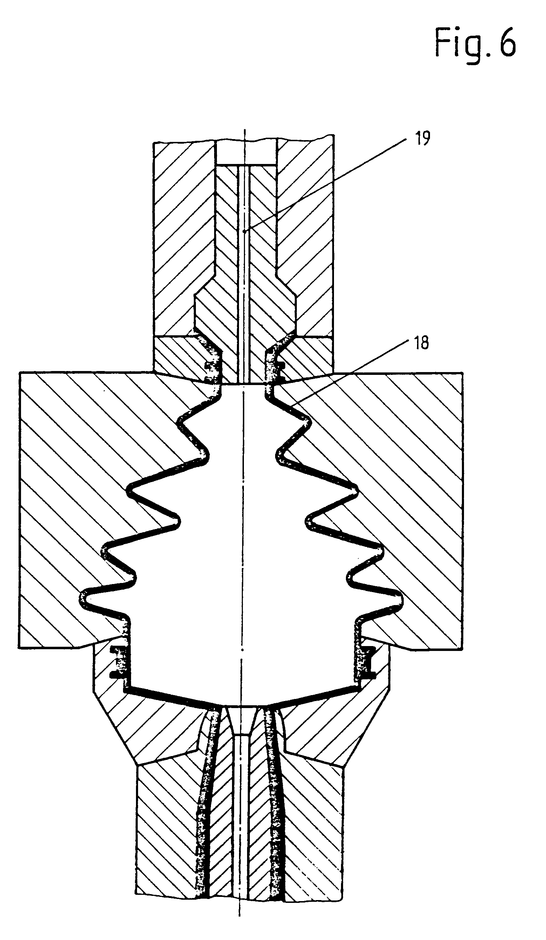

   - Figur 6:: Aufblasen den Balgs.

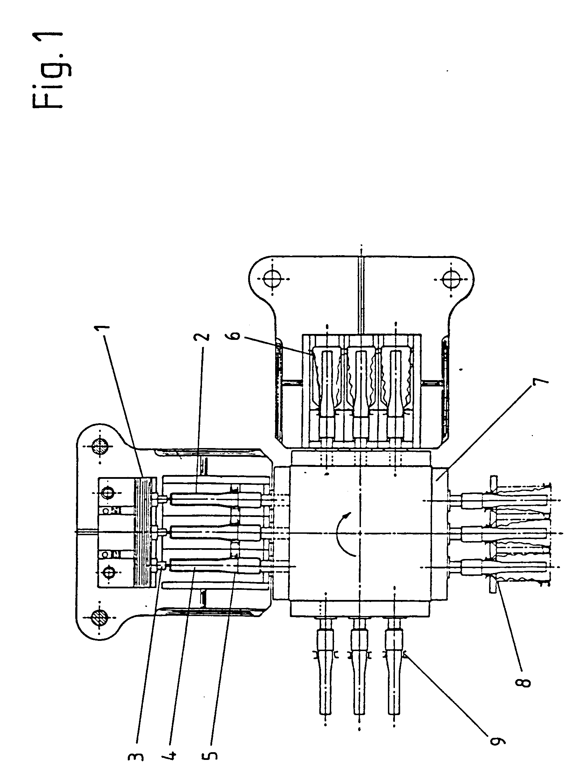

Es sei zunächst Figur 1 betrachtet. Bei der dargestellten Spritzblasvorrichtung sind erkennbar der Heißkanalverteiler 1, das Spritzblasnest 2, die Einspritzdüse 3, der Werkzeugkern mit Blasdorn 4, der Elastomerring 5, die Balgkontur 6, der Drehtisch 7, der fertige Balg 8 und die Kühlstation 9.

An der in der Darstellung mit den Bezugszeichen 1 bis 5 bezeichneten Seite des Werkzeugs erfolgt das Spritzgießen des Rohlings. Im Sinne der Pfeilrichtung folgend wird der Rohling auf der benachbarten Seite aufgeblasen, auf der darauffolgenden Seite werden die Bälge abgestreift und die Vorrichtung auf der letzten der vier Seiten gekühlt.

Beim Spritzblasen kann der Gummiring 5 für die kleinere Einspannstelle des Balgs bereits in der Kühlstation 9 der Vorrichtung auf die Dorne 4 aufgezogen werden. Da zwischen Dorn 4 und Gummiring 5 thermoplastisches Material gespritzt werden muß, sollte der Gummiring über eine Positioniervorrichtung, die am Dorn 4 befestigt ist, gehalten werden. Das Werkzeug wird nun in die Spritzstation geschwenkt und der Rohling gespritzt. Damit ist die engere Einspannstelle des Faltenbalgs bereits fertig ausgeformt. Der Rohling wird nun in die Blasstation gefördert, wo der Gummiring der gegenüberliegenden Einspannstelle eingelegt wird. Durch Aufblasen des Rohlings erhält der Balg seine endgültige Gestalt, und das thermoplastische Material wird gegen den Gummiring gedrückt, wobei es eine unlösbare Verbindung mit diesem eingeht.

Beim Spritzextrudieren (Figur 2 bis 6) kann analog vorgegangen werden, wobei wie beim Spritzblasen an der Einspannstelle das thermoplastische Elastomere durch Anspritzen mit dem dortigen Gummiring verbunden wird und an der gegenüberliegenden Einspannstelle durch den Druck der Blasluft gegen den dort befindlichen Gummiring gedrückt und mit diesem verbunden wird.

Figur 2 zeigt, wie der Dorn 11 nach dem Entformen des fertigen Balgs sich in der oberen Stellung befindet. Dort kann nun der Gummiring 12 für den dünneren Balgquerschnitt in das Spritzextrudier-Werkzeug für die dünne, obere Einspannstelle 13 eingelegt werden. Gleichzeitig kann auch der Gummi 14 für die untere, größere Einspannstelle 15 eingelegt werden. Dann läuft der Prozeß wie folgt ab:

Der Dorn 11 mit dem Spritzgießwerkzeug fährt auf die Düse 16, die dünne Einspannstelle 13 wird ausgespritzt (Figur 3), der Dorn 11 fährt gesteuert hoch (Figur 4), das Blaswerkzeug 17 schließt (Figur 5) und der Balg 18 kann durch Zufuhr der Blasluft 19 ausgeformt werden (Figur 6). Dabei wird, wie beim Spritzblasen, bei der kleineren Einspannstelle der Thermoplast durch Anspritzen mit dem Gummiring 12 verbunden und an der größeren Einspannstelle 15 durch den Druck der Blasluft gegen den Gummiring 14 gedrückt.

Mit der vorliegenden Erfindung ist auch die Durchführung des Extrusionsblasformens möglich. Das Anbringen des Gummiringes ist dabei etwas komplizierter, da dieser über den extrudierten, an der Düse hängenden Schlauch gezogen werden muß. Ferner ist dem Spritzblasen und dem Spritzextrudieren deshalb der Vorzug zu geben, weil diese Verfahren seit langem zur Verfügung stehen.

Das eingangs der Beschreibung erwähnte Phänomen des "kalten Flusses" bei thermoplastischen Werkstoffen tritt bei vernetzten, elastomeren Werkstoffen in weit geringerem Maße auf. In der vorliegenden Erfindung wird daher diese Eigenschaft der Elastomere genau an der Stelle des Faltenbalgs genutzt, wo sie gebraucht wird. Bevorzugte Anwendung wird die Erfindung in den Bereichen finden, wo zu den Kräften der Einspannung noch höhere Temperaturen hinzukommen. Dies ist zum Beispiel bei Gelenkwellen-Bälgen der Fall.

## Patentansprüche

1. Faltenbalg aus thermoplastischem Elastomer mit an seinen beiden gegenüberliegenden Enden befindlichen Einspannstellen, wobei zumindest eine Einspannstelle aus einem anderen Werkstoff als der eigentliche Faltenbalg besteht, dadurch gekennzeichnet, daß dieser andere Werkstoff ein überwiegend gummiartiges, molekular vernetztes, reines Elastomer ist, welches keine thermoplastischen Eigenschaften aufweist, ein mindestens um etwa die Hälfte niedrigeres compression set, d.h. Druckverformungsrest, sowie einen deutlich geringeren Kalten Fluß, d.h. Kaltverformung unter Einwirkung einer äußeren Kraft, als der Werkstoff des eigentlichen Faltenbalgs besitzt und welches mit dem thermoplastischen Elastomer durch Anschweißen bei erhöhter Temperatur unlösbar verbunden ist.

2. Faltenbalg nach Anspruch 1, dadurch gekennzeichnet, daß das thermoplastische Elastomer eine Polymerlegierung aus Polypropylen und EPDM ist und die Einspannstellen aus Styrol-Butadien-Kautschuk oder Ethylen-Propylen-Dien-Terpolymer bestehen.

3. Faltenbalg nach Anspruch 1, dadurch gekennzeichnet, daß das thermoplastische Elastomer ein Polyetherester ist und die Einspannstellen aus Urethan-Kautschuk bestehen.

## Claims

1. A bellows of thermoplastic elastomer with clamping points located at its two opposite ends, at least one clamping point being composed of a different material from the actual bellows, characterized in that this different material is a predominantly rubbery, molecularly crosslinked, pure elastomer which has no thermoplastic properties, possesses a compression set, that is to say a permanent set, which is lower by at least approximately half than that of the material of the actual bellows and a significantly lower cold flow, that is to say cold deformation under the effect of an external force, than the material of the actual bellows and is non-releasably bonded to the thermoplastic elastomer by welding at elevated temperature.

2. A bellows according to claim 1, characterized in that the thermoplastic elastomer is a polymer alloy of polypropylene and EPDM and the clamping points are composed of styrene-butadiene rubber or ethylene-propylene-diene terpolymer.

3. A bellows according to claim 1, characterized in that the thermoplastic elastomer is a polyether ester and the clamping points are composed of urethane rubber.

## Revendications

1. Soufflet en élastomère thermoplastique, pourvu de points de sertissage situés à ses deux extrémités opposées, un au moins des points de sertissage étant constitué dans un autre matériau que le soufflet proprement dit, caractérisé en ce que cet autre matériau est un élastomère pur, gommeux pour sa plus grande part et de structure moléculaire réticulée, qui n'est pourvu d'aucune propriété thermoplastique, qui possède un "compression set" - ou écart permanent - inférieur environ de moitié, ainsi qu'un fluage à froid - ou matriçage à froid sous l'effet d'une force extérieure - nettement inférieur au matériau constituant le soufflet proprement dit et qui est lié de manière indissoluble à l'élastomère thermoplastique par soudage à haute température.

2. Soufflet selon la revendication 1, caractérisé en ce que l'élastomère thermoplastique est un alliage de polymères en polypropylène et en EPDM et que les points de sertissage sont constitués dans du caoutchouc au styrène-butadiène ou un éthylène-propylène-diène-terpolymère.

3. Soufflet selon la revendication 1, caractérisé en ce que l'élastomère thermoplastique est un polyétherester et que les points de sertissage sont constitués dans du caoutchouc uréthane.
